# EUROPÄISCHE PATENTSCHRIFT

(11) **EP 1 057 868 B1**
(45) Veröffentlichungstag und Bekanntmachung des Hinweises auf die Patenterteilung: **29.12.2004**
(21) Anmeldenummer: 00111610.2
(22) Anmeldetag: 31.05.2000
(51) Int. Cl.: C08L 59/00, C08L 59/02, C08K 3/22

(54) **Polyoxymethylenformteile mit verbesserter Widerstandsfähigkeit gegen Dieselkraftstoff und agressiven Ottokraftstoff**
Moulded parts made from polyoxymethylene having improved resistancy against diesel fuel and agressive engine fuels
Des pièces moulées à partir de polymères polyoxyméthylène ayant une meilleure résistance au gasoil et essence agressive

(30) Priorität: 04.06.1999 DE 19925491
(43) Veröffentlichungstag der Anmeldung: 06.12.2000
(73) Patentinhaber: Ticona GmbH, 65451 Kelsterbach (DE)
(72) Erfinder: Kurz, Klaus, Dr., 65451 Kelsterbach (DE); Witan, Kurt, Dr., 65719 Hofheim (DE); Forschler, Bernhard, 64285 Darmstadt (DE)

(56) Entgegenhaltungen:
- EP-A- 0 010 751
- JP-A- 7 228 751
- PATENT ABSTRACTS OF JAPAN vol. 1995, no. 09, 31. Oktober 1995 (1995-10-31) & JP 07 150004 A (POLYPLASTICS CO), 13. Juni 1995 (1995-06-13)

## Beschreibung

Die Erfindung betrifft die Verwendung von Polyethylenglykol und Zinkoxyd enthaltenden Formmassen aus Polyoxymethylen zur Herstellung von Formteilen, die im direkten Kontakt mit Dieselkraftstoff oder aggressivem Ottokraftstoff eingesetzt werden.

Polyoxymethylene (POM) werden auf Grund ihrer hervorragenden mechanischen Eigenschaften und guten chemischen Beständigkeit seit Jahren im Automobil für viele Anwendungen eingesetzt. Speziell die hohe Beständigkeit gegen Kraftstoffe wird in Kraftstoffördereinheiten genutzt. Bei den bestehenden Anwendungen müssen besonders die geforderten Crash-Anforderungen erfüllt werden, was eine ausreichende Zähigkeit der Bauteile bedingt.

Die Temperaturanforderungen, die bisher an Bauteile aus POM im Kraftstoffzu- und Rückführungssystemen bestanden, lagen bei Gebrauchstemperaturen bis zu 60 °C. Unter diesen Bedingungen zeigt die langjährige Erfahrung aus dem Fahrzeugbetrieb, daß POM die gestellten Anforderungen hervorragend erfüllt.

Bei den von der Automobilindustrie neu entwickelten Motorengenerationen werden vor allem für mit Dieselkraftstoff betriebene Fahrzeuge die Anforderungen an die Temperaturbeständigkeit zu deutlich höheren Werten von 100 °C und mehr verschoben. Deshalb müssen auch die aus POM gefertigten Bauteile diesen angehobenen Ansprüchen genügen. Es stellte sich jedoch heraus, daß bei den hohen Temperaturen der Dieselkraftstoff altert und auf POM schädigend wirkt. So werden zum Beispiel Schwefel bzw. schwefelhaltige Verbindungen, die im Dieselkraftstoff enthalten sind, bei Luftzutritt zu sauren Schwefelverbindungen oxidiert, die zersetzend auf POM wirken. Die Schädigung ist bei Probekörpern durch meßbaren Gewichtsverlust und Verlust an Zähigkeit (z.B. verminderte Bruchdehnung) erkennbar.

Andererseits ist auch bekannt, daß Ottokraftstoffe altem können, wobei aggressive Alterungsprodukte entstehen können. Um derartige Alterungsvorgänge und deren Einfluß auf Bauteile zu simulieren, werden in Beständigkeitsprüfungen, beispielsweise gemäß US-Norm SAE J 1681, besonders aggressive Ottokraftstoffe eingesetzt. Diese Kraftstoffe haben im allgemeinen einen besonders sauren und oxidativen Charakter und können somit ebenso wie Dieselkraftstoffe schädigend auf POM einwirken. Bauteile die für Anwendungen mit direktem Kraftstoffkontakt vorgesehen sind, müssen jedoch zunehmend diesen höheren Anforderungen genügen. Insbesondere von der Automobilindustrie werden derartige Tests gefordert.

Aufgabe der vorliegenden Erfindung war es deshalb, eine Formmasse aus Polyoxymethylen zu finden, die es ermöglicht, daraus Bauteile herzustellen, die den erhöhten Anforderungen an die Beständigkeit gegen Dieselkraftstoff und aggressiven Ottokraftstoff gerecht werden.

Eine Möglichkeit zur Verbesserung der Beständigkeit gegen Dieselkraftstoff wird in Patentschrift DE 197 02 425 A1 angeführt. Die gewünschte Verbesserung wird dabei durch die Zugabe von 0,1 bis 2 Gew. -% mindestens einer sterisch gehinderten Aminverbindung erzielt.

Die vorliegende Erfindung zeigt einen vollständig neuen Weg auf, um die gewünschte Wirkung zu erzielen. Als Additive werden dabei ZnO und Polyalkylenglykol, das eine zusätzliche Verbesserung der Zähigkeit bewirkt, eingesetzt.

Die Erfindung betrifft die Verwendung einer thermoplastischen Formmasse aus einer Mischung von
(A) 80 bis 99,8 Gew.-% eines Polyoxymethylenhomo- oder copolymerisats
(B) 0,1 bis 10 Gew.-% eines Polyalkylenglykols
(C)0,1 bis 10 Gew.-% eines Zinkoxyds
wobei die Summe der Gewichtsprozente der Komponenten (A) bis (C) jeweils 100% ergibt, zur Herstellung von Formteilen für Anwendungen mit direktem Kontakt zu Dieselkraftstoff oder Ottokraftstoff.

Gemäß der Erfindung werden als Basispolymere (Komponente A) die bekannten Polyoxymethylene eingesetzt, wie sie beispielsweise in der DE-A 2 947 490 beschrieben sind. Es handelt sich hierbei im wesentlichen um unverzweigte lineare Polymere, die in der Regel mindestens 80 Mol-%, vorzugsweise mindestens 90 Mol-% Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung. Copolymere sind Polymere aus Formaldehyd oder seinen cyclischen Oligomeren, insbesondere Trioxan, und cyclischen Ethern, cyclischen Acetalen und/oder linearen Polyacetalen.

Als Comonomere kommen vor allem cyclische Ether mit 3, 4 oder 5, vorzugsweise 3 Ringgliedern, von Trioxan verschiedene cyclische Acetale mit 5 bis 11, vorzugsweise 5, 6, 7 oder 8 Ringgliedem und lineare Polyacetale in Frage. Der Anteil der Cokomponenten am Polymeren beträgt im allgemeinen 0,1 bis 20 Mol-%, vorzugsweise 0,5 bis 10 Mol-%. Am besten eignen sich Copolymere aus 95 bis 99,5 Mol-% Trioxan und 0,5 bis 5 Mol-% einer der vorgenannten Cokomponenten

Der Anteil des Polyoxymethylens an der erfindungsgemäßen Mischung beträgt vorzugsweise 95 bis 99 Gew.-%.

Der Polyalkylenglykol hat vorzugsweise eine mittlere molare Masse von 10000 bis 45000, insbesondere von 20000 bis 40000. Sein Anteil an der Mischung beträgt vorzugsweise 0,5 bis 5 Gew.-%, besonders bevorzugt 1 bis 3 Gew.-%. Bevorzugte Polyalkylenglykole sind Polyethylenglykol und Polypropylenglykol, besonders bevorzugt ist Polyethylenglykol.

Der Anteil des Zinkoxyds an der Mischung beträgt vorzugsweise 0,5 bis 5 Gew.-% und besonders bevorzugt 0,5 bis 3 Gew.-%.

Die erfindungsgemäße Mischung kann in den erforderlichen Mengen Zusatzstoffe, wie Stabilisatoren, Nukleierungsmittel (im speziellen Talk), Antistatika, Lichtschutzmittel, Gleit- und Schmiermittel, Weichmacher, Pigmente, Farbstoffe, optische Aufheller, Verarbeitungshilfsmittel und dergleichen enthalten.

Als Stabilisatoren der Polyacetale eignen sich gegen den Einfluß von Wärme insbesondere Polyamide, Amide, z.B. Dicyandiamid, Hydrazine, Harnstoffe, Poly-(Nvinyllactame) und Erdalkalisalze von aliphatischen, vorzugsweise hydroxylhaltigen, ein- bis dreibasigen Carbonsäuren mit 2 bis 20 Kohlenstoffatomen, z.B. Calciumstearat, Caiciumrizinaleat, Calciumlactat und Calciumcitrat. Als Oxidationsstabilisatoren werden vor allem Biphenolverbindungen verwendet, vorzugsweise Diester von einbasigen 4-Hydroxyphenylalkansäuren, die 7 bis 13, vorzugsweise 7, 8, oder 9 Kohlenstoffatome enthalten.

Als Lichtstabilisatoren sind beispielsweise alpha-Hydroxybenzophenonderivate und Benzotriazolderivate geeignet.

Die Stabilisatoren werden für gewöhnlich in einer Menge von insgesamt 0,1 bis 5 Gew.-%, insbesondere in Mengen von 0,5 bis 3 Gew.-% bezogen auf die gesamte Formmasse eingesetzt. Je nach Zusammensetzung können aber auch hiervon abweichende Mengen erforderlich sein.

Weiterhin kann die erfindungsgemäße Mischung auch Füll- und Verstärkungsstoffe (D) enthalten. Hierbei kann es sich u.a. um faserförmige Verstärkungsmaterialien wie Glasfasern, Kohlenstofffasem etc. sowie nicht faserige Füllstoffe wie Glaspulver, Graphit, Ruß, Metallpulver, Metalloxide, Silikate, Carbonate und Molybdän (IV)-Sulfid handeln. Diese Füllstoffe können mit einem Haftvermittler bzw. Haftvermittlersystem ausgerüstet sein. Die Gesamtmenge an Füll- und/oder Verstärkungsstoffen (D) beträgt gewöhnlich bis zu 50 Gew.-%, vorzugsweise 5 bis 40 Gew.-%, bezogen auf die Gesamtmischung aus den Komponenten (A)-(D).

Die Herstellung der erfindungsgemäßen Mischungen erfolgt beispielsweise durch intensives Mischen der Bestandteile bei erhöhter Temperatur, d.h. im allgemeinen bei Temperaturen oberhalb des Schmelzpunktes der Komponente A, also bei etwa 160 bis 250 °C, vorzugsweise zwischen 180 und 220 °C in gut mischenden Aggregaten, z.B. in Knetem oder Extrudern, vorteilhaft in Zweischneckenextrudem. Üblicherweise werden die pulverförmigen Komponenten zunächst bei Raumtemperatur mechanisch gemischt und anschließend zur vollständigen Homogenisierung aufgeschmolzen.

Bei der Verwendung von Zusatz-, Füll- und Verstärkungsstoffen kann es aber auch vorteilhaft sein, Masterbatches oder Konzentrate davon einzusetzen. Faserförmige Materialien können beispielsweise auch als Endlosmaterial dem Mischaggregat, insbesondere dem Extruder, zugeführt werden.

Die erfindungsgemäß verwendbaren thermoplastischen Formmassen zeichnen sich durch ein ausgewogenens Eigenschaftsspektrum aus. Daraus hergestellte Formteile sind für hohe Dauergebrauchstemperaturen bis zu 100 °C im Kontakt mit Dieselkraftstoff sowie für den dauerhaften Kontakt mit gealtertem oder aggressivem Ottokraftstoff geeignet. Im Vergleich zu POM-Formmassen, die keine oder nur eine der Komponenten (B) und (C) beinhalten, sind die erfindungsgemäßen Formmassen sowohl durch einen geringen chemischen Abbau als auch durch einen geringen Verlust mechanischer Eigenschaften gekennzeichnet.

Zu den möglichen Anwendungsgebieten zählen insbesondere Kraftstoffbehälter, Kraftstoffleitungen, Verbindungsstücke, Ventilkörper sowie Kraftstoffördereinheiten und Vorratsgeber. Mögliche Bauteile in Kraftstoffördereinheiten und Vorratsgebem sind beispielsweise Flansche, Schwalltöpfe, Pumpenhalter, Kraftstoffpumpen, Pumpendeckel, Filtersiebe etc.

### Beispiele

Für die erfindungsgemäßen Beispiele 1, 2, 3, und 4 sowie für das Vergleichsbeispiel I wurden folgende Komponenten eingesetzt:

### Komponente A

Polyoxymethylencopolymerisat aus 98,6 Gew.-% Trioxan und 1,4 Gew.-% Dioxolan. Die Schmelzvolumenrate betrug 12,5 cm³/10 min. (190 °C, 2,16 kg Auflagegewicht nach ISO 1133).

### Komponente B

Polyethylenglykol 35000 P der Firma Clariant GmbH; Polyethylenglykol mit mittlerer molarer Masse von 35000.

### Komponente C

Zinkoxyd aktiv® der Bayer AG.

Das POM-Copolymerisat wurde mit den Gewichtsteilen der entsprechenden Komponenten gemäß Tabelle 1 gemischt und in einem Doppelschneckenextruder ZE 25 x 33 D (Firma Berstorff, Hannover, Bundesrepublik Deutschland) bei einer Massetemperatur von 200 °C aufgeschmolzen und anschließend granuliert.

Das Granulat wurde acht Stunden bei 120 °C getrocknet und anschließend zu Probekörpern für die Lagerungsversuche und mechanischen Prüfungen gespritzt. Die Verarbeitungsbedingungen wurden nach den Empfehlungen der ISO 9988-2, Stoff-Norm für POM, gewählt.

### Lagerungen und Messungen:

Vor der Lagerung wurden je fünf Prüfkörper zur Bestimmung des Ausgangsgewichtes gewogen. Außerdem wurden fünf weitere Prüfkörper als Nullprobe zur Bestimmung der mechanischen Eigenschaften im Zugversuch verwendet. Die Verwendung von ISO ¼-Zugstäben (in früherer ISO 527), die nur 1 mm Dicke aufweisen, im Vergleich zu Zugstab Typ 1A (ISO 527-1,2) mit 4 mm Dicke, ist damit begründet, daß bei kleineren Abmessungen der Probekörper ein deutlich größerer Meßeffekt für den Materialabbau und die mechanischen Eigenschaften gefunden wird.

Die Probekörper wurden für 500 h bei einer Temperatur von 100 °C in einem Glasgefäß mit Rückflußkühler und Ventil zum Luftabschluß in Test-Dieselkraftstoff RF 73-A-93 der Firma Haltermann gelagert. Das Kraftstoffvolumen betrug ca. 2 l und war von ca. 1 l Luft überlagert. Es erfolgte ein wöchentlicher Kraftstoffwechsel.

Die Probekörper wurden nach Lagerung entnommen und anhaftende Flüssigkeitsreste mit einem Tuch entfernt. Durch eine zweite Wägung wurde die Gewichtsänderung nach Lagerung bestimmt. Anschließend wurde mit den gelagerten Proben ein Zugversuch nach ISO 527 mit einer Zuggeschwindigkeit von 12,5 mmlmin durchgeführt.

**Tabelle 1**

| enthält die Zusammensetzung der Materialien mit den entsprechenden Prüfergebnisen. | | | | | |
|---|---|---|---|---|---|
| Tabelle 1 | l | 1 | 2 | 3 | 4 |
| Komponente A [Gew.-%] | 100 | 97 | 98 | 99 | 98 |
| Komponente B [Gew.-%] | - | 2,0 | 1,0 | - | 2,0 |
| Komponente C [Gew. -%] | - | 1,0 | 1,0 | 1,0 | - |
| Gewichtsänderung [%] | -17,9 | -3,3 | -2,6 | -1,9 | -8,4 |
| Bruchdehnung vor Lagerung [%] | 69,4 | 60,1 | 58,1 | 62,9 | 72,8 |
| Bruchdehnung nach Lagerung [%] | 12,3 | 35 | 36,4 | 22,5 | 22,9 |
| Anderung der Bruchdehnung [%] | -82,3 | -41,8 | -37,4 | -64,2 | -68,5 |

Es ist deutlich erkennbar, daß der Materialabbau durch die Komponenten B und C wesentlich verringert wird. Die besten Ergebnisse unter möglichst geringem Verlust an Bruchdehnung und geringem Materialabbau werden mit einer Kombination der Komponenten B und C erzielt.

## Patentansprüche

1. Verwendung einer thermoplastischen Formmasse enthaltend (A) 80 bis 99,8 Gew.-% eines Polyoxymethylenhomo- oder copolymerisates, (B) 0,1 bis 10 Gew.-% eines Polyalkylenglykols und (C) 0,1 bis 10 Gew.-% eines Zinkoxyds, wobei die Summe der Komponenten (A), (B) und (C) jeweils 100 Gew.-% ergibt, zur Herstellung von Formteilen für Anwendungen mit direktem Kontakt zu Dieselkraftstoff oder Ottokraftstoff.

2. Verwendung von Formteilen enthaltend (A) 30 bis 99,8 Gew.-% eines Polyoxymethylenhomo- oder copolymerisates, (B) 0,1 bis 10 Gew.-% eines Polyalkylenglykols, (C) 0,1 bis 10 Gew.-% eines Zinkoxyds und (D) 0 bis 50 Gew.-% Füll-, Verstärkungs- und/oder Zusatzstoffe, wobei die Summe der Komponenten (A), (B), (C) und (D) jeweils 100 Gew.-% ergibt, für Anwendungen mit direktem Kontakt zu Dieselkraftstoff oder Ottokraftstoff.

3. Verwendung nach Anspruch 1 oder 2, **dadurch gekennzeichnet, daß** der Polyalkylenglykol eine mittlere Molmasse von 10000 bis 45000 aufweist.

4. Verwendung nach Anspruch 1 oder 2, **dadurch gekennzeichnet, daß** als Polyalkylenglykol Polyethylenglykol oder Polypropylenglykol verwendet wird.

5. Verwendung nach einem der Ansprüche 1 bis 4, **dadurch gekennzeichnet, daß** es sich bei den Formteilen um Kraftstoffbehälter, Kraftstoffleitungen, Ventilkörper, Verbindungsstücke, Kraftstoffördereinheiten oder Vorratsgeber handelt.

## Claims

1. The use of a thermoplastic molding composition comprising (A) from 80 to 99.8% by weight of a polyoxymethylene homopolymer or copolymer, (B) from 0.1 to 10% by weight of a polyalkylene glycol and (C) from 0.1 to 10% by weight of a zinc oxide, where the sum of components (A), (B) and (C) in each case gives 100%, for the production of moldings for applications with direct contact with diesel fuel or gasoline.

2. The use of moldings comprising (A) from 30 to 99.8% by weight of a polyoxymethylene homopolymer or copolymer, (B) from 0.1 to 10% by weight of a polyalkylene glycol, (C) from 0.1 to 10% by weight of a zinc oxide and (D) from 0 to 50% by weight of fillers, reinforcing materials and/or additives, where the sum of components (A), (B), (C) and (D) in each case gives 100%, for applications with direct contact with diesel fuel or gasoline.

3. The use as claimed in claim 1 or 2, wherein the polyalkylene glycol has a mean molecular weight of from 10,000 bis 45,000.

4. The use as claimed in claim 1 or 2, wherein the polyalkylene glycol used is polyethylene glycol or polypropylene glycol.

5. The use as claimed in one of claims 1 to 4, wherein the moldings are fuel tanks, fuel lines, valve bodies, connecting pieces, fuel conveying units or fuel level sensors.

## Revendications

1. Utilisation d'une matière à mouler thermoplastique contenant (A) 80 à 99,8 % en poids d'un homopolymère polyoxyméthylène ou d'un copolymère de polyoxyméthylène, (B) 0,1 à 10 % en poids d'un polyalkylèneglycol et (C) 0,1 à 10 % en poids d'un oxyde de zinc, la somme des composants (A), (B) et (C) donnant chaque fois 100 % en poids, pour la fabrication de pièces moulées destinées à des emplois en contact direct avec du carburant Diesel ou du carburant pour moteurs à allumage par étincelle.

2. Utilisation de pièces moulées contenant (A) 30 à 99,8 % en poids d'un homopolymère polyoxyméthylène ou d'un copolymère de polyoxyméthylène, (B) 0,1 à 10 % en poids d'un polyalkylèneglycol, (C) 0,1 à 10 % en poids d'un oxyde de zinc et (D) 0 à 50 % en poids de charges, renforts et/ou additifs, la somme des composants (A), (B), (C) et (D) donnant chaque fois 100 % en poids, pour des emplois en contact direct avec du carburant Diesel ou du carburant pour moteurs à allumage par étincelle.

3. Utilisation selon la revendication 1 ou 2, **caractérisée en ce que** le polyalkylèneglycol présente une masse moléculaire moyenne de 10 000 à 45 000.

4. Utilisation selon la revendication 1 ou 2, **caractérisée en ce qu'**on utilise en tant que polyalkylèneglycol du polyéthylèneglycol ou du polypropylèneglycol.

5. Utilisation selon l'une quelconque des revendications 1 à 4, **caractérisée en ce que** les pièces moulées consistent en des réservoirs de carburant, des conduits de carburant, des corps de soupapes, des pièces de raccord, des unités de transport de carburant ou des dispositifs d'alimentation.
